**Europäisches Patentamt**

**European Patent Office**

**Office européen des brevets**

(19)

(11) Veröffentlichungsnummer : **0 135 599
B1**

(12) **EUROPÄISCHE PATENTSCHRIFT**

(45) Veröffentlichungstag der Patentschrift :
08.07.87

(51) Int. Cl.⁴ : **H 04 N   9/64**, H 04 N   9/77

(21) Anmeldenummer : **83109517.9**

(22) Anmeldetag : **24.09.83**

(54) Integrierte Schaltung eines Digitalfilters für den Luminanzkanal von Farbfernsehempfängern.

(43) Veröffentlichungstag der Anmeldung :
**03.04.85 Patentblatt 85/14**

(45) Bekanntmachung des Hinweises auf die Patenterteilung : **08.07.87 Patentblatt 87/28**

(84) Benannte Vertragsstaaten :
**DE FR NL**

(56) Entgegenhaltungen :
**FERNSEH- UND KINO-TECHNIK, Band 35, Nr. 9, 1981,
Seiten 317-323, Berlin, DE. W. WELTERBACH et al.:
"Digitale Videosignalverarbeitung im Farbfernsehempfänger"
TAGUNGSBAND DER 10. JAHRESTAGUNG DER
FKTG, 13.-17. September 1982, München, Seiten 392-
408, Mainz, DE. M. JACOBSEN: "Adaptive Techniken
bei der digitalen Videosignalverarbeitung in Farbfernsehempfängern"**

(73) Patentinhaber : **Deutsche ITT Industries GmbH
Hans-Bunte-Strasse 19 Postfach 840
D-7800 Freiburg (DE)
DE
ITT INDUSTRIES INC.
320 Park Avenue
New York, NY 10022 (US)
FR NL**

(72) Erfinder : **Baker, Peotr
Fishpond House Park Road
Allington NG32, 2EB (GB)**

(74) Vertreter : **Morstadt, Volker, Dipl.-Ing.
c/o Deutsche ITT Industries GmbH Patent/Lizenzab-
teilung Postfach 840 Hans-Bunte-Strasse 19
D-7800 Freiburg/Brsg. (DE)**

## Beschreibung

Die Erfindung betrifft eine integrierte Schaltung eines der Bildschärfeverbesserung dienenden Digitalfilters für den digital arbeitenden Luminanzkanal von Farbfernsehempfängern (im Englischen wird Bildschärfeverbesserung mit Peaking bezeichnet). Ein derartiges Digitalfilter ist in der Zeitschrift « Fernseh- und Kinotechnik », 1981, s. 317-323, insbesondere auf Seite 319, Bild 4 angegeben. Dieses bekannte Digitalfilter enthält eine signalflußmäßige erste Reihenschaltung von Teilschaltungen, deren erste aus einem ersten Verzögerungsglied und aus einem ersten Addierer für das Eingangs- und das Ausgangssignal des ersten Verzögerungsglieds besteht und deren zweite ein zweites Verzögerungsglied, einen Multiplizierer, dessen eines Eingangssignal ein das Maß der Bildschärfeverbesserung bestimmender Faktor, der Peaking-Faktor k, ist, und einen das Ausgangssignal des Digitalfilters liefernden Summierer enthält, dessen erster Eingang bzw. dessen zweiter Eingang mit dem Ausgang des zweiten Verzögerungsglieds bzw. mit dem Ausgang des Multiplizierers verbunden ist. Dabei ist die Verzögerungszeit der Verzögerungsglieder ein ganzzahliges Vielfaches der Periodendauer des Taktsignals des Digitalfilters, dessen Frequenz gleich der vierfachen Farbhilfsträgerfrequenz ist. Aus der vollständigen Schaltungsstruktur des vorbeschriebenen Digitalfilters ergibt sich, daß es Eingangssignale mit der Frequenz 0 unterschiedlich stark, nämlich in Abhängigkeit vom Peaking-Faktor bewertet. Durch unterschiedliche Wahl dieses Faktors erreichte unterschiedliche Amplitudencharakteristiken haben daher unterschiedliche Gleichanteile. Diese Eigenschaft muß jedoch bei der Verwendung im digitalen Luminanzkanal von Farbfernsehempfängern kompensiert werden, d. h. bei der vorbeschriebenen Anordnung ist mindestens ein weiterer Multiplizierer erforderlich, der die erwähnte Abhängigkeit vom Peaking-Faktor in gegenläufigem Sinn ausgleicht. Der weitere Multiplizierer ist im erwähnten Bild 4 a. a. O. zwar nicht gezeigt, dessen Vorhandensein ergibt sich jedoch zwangsläufig aus den Amplitudencharakteristiken von Bild 5 auf Seite 319, worin diese einen konstanten Gleichanteil haben.

Das vorbeschriebene Digitalfilter weist somit insgesamt drei Multiplizierer auf, so daß die Gesamtschaltung recht aufwendig ist.

Die Aufgabe der in den Ansprüchen gekennzeichneten Erfindung besteht daher darin, das vorbeschriebene Digitalfilter so zu verbessern, daß insbesondere auf den zusätzlichen, dem Amplitudenausgleich dienenden Multiplizierer verzichtet werden kann, d. h. unterschiedliche Amplitudencharakteristiken sollen für verschiedene Werte des Peaking-Faktors denselben Gleichanteil haben. Dabei soll die Eigenschaft des vorbeschriebenen Digitalfilters, konstante Gruppenlaufzeit zu haben, erhalten bleiben, ebenso wie die Eigenschaft, daß die Sprungantwort (im Englischen step response) jeweils nur einen einzigen Überschwinger bei Anlegen der Sprungfunktion enthält.

Die Erfindung wird nun anhand der Figuren der Zeichnung näher erläutert.

Figur 1 zeigt in üblicher Digitalfilter-Schaltschema-Darstellung ein Ausführungsbeispiel der Erfindung,

Figur 2 zeigt das Schaltschema einer Weiterbildung der Erfindung,

Figur 3 zeigt das Schaltschema einer anderen Weiterbildung der Erfindung,

Figur 4 zeigt das Schaltschema für eine spezielle Realisierung des Multiplizierers der Fig. 1 bis 3,

Figur 5 zeigt Amplitudencharakteristiken des Ausführungsbeispiels nach Fig. 1 und

Figur 6 zeigt entsprechende Amplitudencharakteristiken für die Weiterbildung nach Fig. 3.

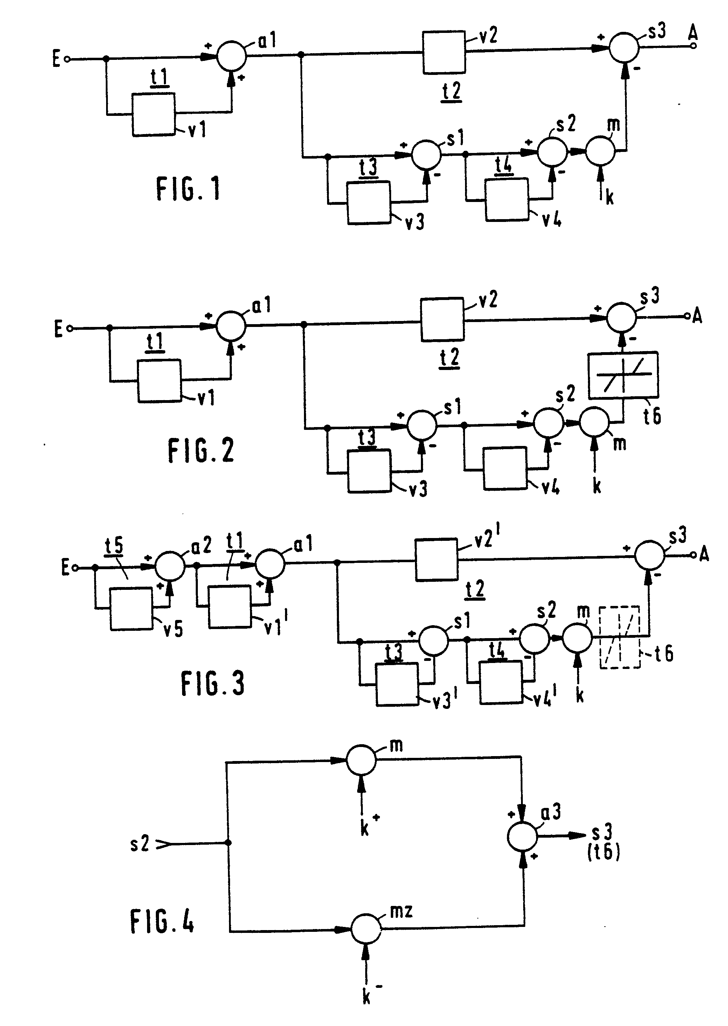

Die Fig. 1 zeigt in üblicher Digitalfilter-Schaltschema-Darstellung die Schaltung eines Ausführungsbeispiels der Erfindung. Diese schematische Darstellung besteht darin, daß die für das Filterverhalten wesentlichen Schaltungsteile, nämlich Verzögerungsglieder v..., der Multiplizierer m, Addierer a... und Subtrahierer s... in ihrer für den Signalfluß verantwortlichen Weise miteinander verknüpft sind. Die Verzögerungsglieder v... sind dabei bezüglich ihrer Verzögerungszeit als gleichdimensioniert vorausgesetzt, und zwar derart, daß sie gleich der Periodendauer des Taktsignals des Digitalfilters ist. Für die vorgesehene Verwendung im digitalen Luminanzkanal von Farbfernsehempfängern hat das Taktsignal die vierfache Farbhilfsträgerfrequenz entsprechend der jeweiligen Farbfernsehnorm (PAL, NTSC, SECAM).

Die Verbindungsleitungen in den Fig. 1 bis 4 sind jeweils Datenleitungen, die bei der erwähnten hohen Frequenz des Taktsignals bevorzugt als Busse für die parallele Datenverarbeitung ausgebildet sind.

Das Ausführungsbeispiel nach Fig. 1 umfaßt die vier Teilschaltungen t1, t2, t3, t4. Die erste Teilschaltung besteht aus dem ersten Verzögerungsglied v1 und dem ersten Addierer a1, dessen einer Eingang zusammen mit dem Eingang des ersten Verzögerungsglieds v1 mit dem Eingang E des Digitalfilters verbunden ist und dessen zweiter Eingang am Ausgang des ersten Verzögerungsglieds v1 liegt. Der Ausgang des ersten Addierers a1 ist mit dem Eingang der zweiten Teilschaltung t2 und folglich mit dem jeweiligen Eingang des zweiten und des dritten Verzögerungsglieds v2, v3 und mit dem Minuendeingang des ersten Subtrahierers s1 verbunden, an dessen Subtrahend-Eingang der Ausgang des dritten Verzögerungsglieds v3 liegt. Der Ausgang des ersten Subtrahierers s1 liegt am Eingang der vierten Teilschaltung t4 und somit am Eingang des vierten Verzögerungsglieds v4 und am Minuend-Eingang des zweiten Subtrahierers s2, dessen Subtrahend-Eingang mit dem Ausgang des vierten Verzögerungsglieds v4 verbunden ist. Der Ausgang des zweiten Subtrahierers s2 liegt am einen Eingang des Multiplizierers m, dessen anderem Eingang der Peaking-Faktor k zugeführt ist.

Der Ausgang des zweiten Verzögerungsglieds v2 liegt am Minuend-Eingang des dritten Subtrahierers s3, dessen Subtrahend-Eingang mit dem Ausgang des Multiplizierers m verbunden ist und dessen Ausgang den Ausgang A des Digitalfilters bildet. Wie bereits erwähnt, ist im Ausführungsbeispiel nach Fig. 1 die Verzögerungszeit der vier Verzögerungsglieder v1 ... v4 gleich der Periodendauer des Taktsignals des Digitalfilters.

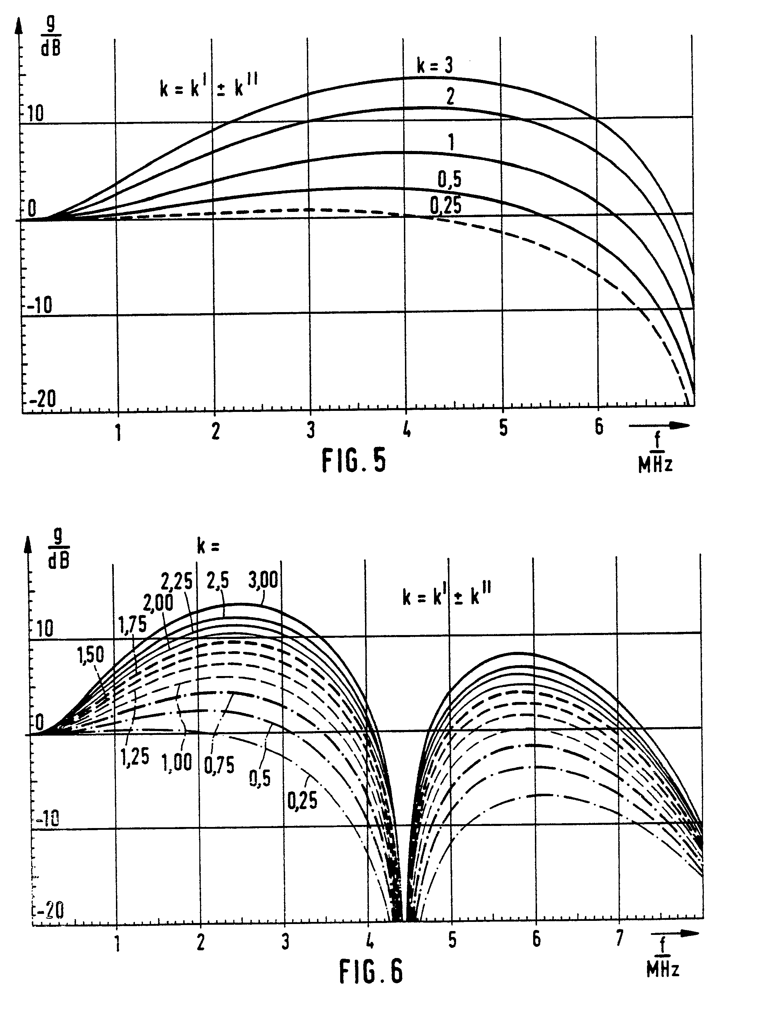

Für unterschiedliche dezimale Zahlenwerte des Peaking-Faktors k zeigt die Fig. 5 den Verlauf der Amplitude g über der Frequenz f eines für die NTSC-Norm dimensionierten Digitalfilters entsprechend Fig. 1, wobei der Dämpfungspol bei der doppelten NTSC-Farbhilfsträgerfrequenz liegt.

In Fig. 2 ist eine Weiterbildung der Anordnung nach Fig. 1 gezeigt, mit der es möglich ist, kleine Signalamplituden mit höheren Frequenzen, die im allgemeinen auf Rauschen oder Störungen zurückzuführen sind, im Ausgangssignal des Digitalfilters zu unterdrücken. Hierzu ist zwischen dem Ausgang des Multiplizierers m und dem Subtrahend-Eingang des dritten Subtrahierers s3 die weitere Teilschaltung t6 eingefügt, die allgemein eine nichtlineare Amplitudencharakteristik aufweisen kann, im vorliegenden Fall die zur Unterdrückung kleiner Signale geeignete und schematisch in Fig. 2 angedeutete Amplitudencharakteristik aufweist. Die übrigen Teile des Schaltschemas nach Fig. 2 sind mit denen von Fig. 1 identisch.

Die Fig. 3 zeigt eine andere Weiterbildung der Erfindung, nämlich das Schaltschema für ein für PAL-Farbfernsehempfänger geeignetes Digitalfilter, das auch für NTSC-Empfänger geeignet ist, wenn eine Farbträgerfalle notwendig ist, d. h. für Farbfernsehempfänger ohne Kammfilter. Die Anordnung nach Fig. 3 ist gegenüber der nach Fig. 1 durch die fünfte Teilschaltung t5 erweitert, die der ersten Teilschaltung t1 vorgeschaltet ist, so daß der Eingang E des Digitalfilters am Eingang dieser fünften Teilschaltung t5 liegt. Sie besteht aus dem fünften Verzögerungsglied v5 und dem zweiten Addierer a2, dessen einer Eingang zusammen mit dem Eingang des fünften Verzögerungsglieds v5 mit dem Eingang E verbunden ist und dessen anderer Eingang am Ausgang des fünften Verzögerungsglieds v5 liegt. Der Ausgang des zweiten Addierers a2 führt dann zum Eingang der ersten Teilschaltung t1. Die übrige Schaltung der Fig. 3 ist mit der der Fig. 1 identisch, jedoch sind das erste bis vierte Verzögerungsglied mit den Bezugszeichen v1′, v2′, v3′, v4′ versehen, da im Ausführungsbeispiel der Fig. 3 diese Verzögerungsglieder die doppelte Periodendauer des Taktsignal des Digitalfilters als Verzögerungszeit haben, während das fünfte Verzögerungsglied v5 wiederum die einfache Periodendauer des Taktsignals als Verzögerungszeit aufweist.

In Fig. 3 ist gestrichelt angedeutet, daß auch hier wie in Fig. 2 die weitere Teilschaltung t6 mit den dort genannten Eigenschaften eingesetzt werden kann.

Für unterschiedliche dezimale Zahlenwerte des Peaking-Faktors k zeigt die Fig. 6 den Verlauf der Amplitude g über der Frequenz f eines für die PAL-Norm dimensionierten Digitalfilters entsprechend Fig. 3 ohne die weitere Teilschaltung t6. Die Kurvenschar hat einen Dämpfungspol bei der PAL-Farbhilfs trägerfrequenz (4,43 MHz).

Die Fig. 4 zeigt schematisch, wie bei im natürlichen Binärcode vorliegenden Datensignalen und für dezimale Zahlenwerte des Peaking-Faktors k in Form von Zweierpotenzen die Funktion des Multiplizierers m bevorzugt realisiert werden kann. Dem Multiplizierer m ist eine erste positive Zweierpotenz k zugeführt, während eine zweite Zweierpotenz k oder die Zahl null dem Zusatzmultiplizierer mz zugeführt ist, wobei dessen einer Eingang zusammen mit dem einen Eingang des Multiplizierers m am Ausgang des zweiten Subtrahierers s2 liegt ; beide Multiplizierer m, mz können als Datenselektoren ausgeführt werden. Der jeweilige Ausgang von Multiplizierer m und Zusatzmultiplizierer mz liegen jeweils an einem Eingang des dritten Addierers a3, dessen Ausgang zum dritten Subtrahierer s3 bzw. der weiteren Teilschaltung t6 führt. Somit ist es möglich, wie dies durch die Zahlenwerte in Fig. 6 angedeutet ist, auch rationale Zahlenwerte des Peaking-Faktors k zu realisieren.

Von den Vorteilen der Erfindung sei zunächst erwähnt, daß das Digitalfilter bei der Frequenz 0 eine Verstärkung von $2^n$ (n = 0, 1, 2, 3...) und einen vom gewählten Zahlenwert des Peaking-Faktors k unabhängigen Wert hat. Somit wird kein zusätzliches Quantisierungsrauschen durch die Schaltung erzeugt. Ein weiterer Vorteil besteht darin, daß das Digitalfilter, ohne seine Eigenschaften zu verlieren, auch für nichtlineare Signalverarbeitung geeignet ist, was lediglich durch die Hinzufügung der erwähnten sechsten Teilschaltung t6 erreichbar ist. Auch läßt sich das Digitalfilter bevorzugt in Isolierschicht-Feldeffekttransistor-Technik, also der sogenannten MOS-Technik, realisieren.

**Patentansprüche**

1. Integrierte Schaltung eines der Bildschärfeverbesserung (= Peaking) dienenden Digitalfilters für den digital arbeitenden Luminanzkanal von Farbfernsehempfängern, das eine signalflußmäßige erste Reihenschaltung von Teilschaltungen enthält, deren erste (t1) aus einem ersten Verzögerungsglied (v1 ; v1′) und aus einem ersten Addierer (a1) für das Eingangs- und das Ausgangssignal des ersten Verzögerungsglieds (v1 ; v1′) besteht und deren zweite (t2) ein zweites Verzögerungsglied (v2 ; v2′), einen Multiplizierer (m), dessen eines Eingangssignal ein das Maß der Bildschärfeverbesserung bestimmender Faktor (= Peaking-Faktor k) ist, und einen das Ausgangssignal des Digitalfilters liefernden Summierer (s3) enthält, dessen erster Eingang bzw. dessen zweiter Eingang mit dem Ausgang des zweiten Verzögerungsglieds (v2 ; v2') bzw. mit dem Ausgang des Multiplizierers (m) verbunden ist, wobei die Verzögerungszeit der Verzögerungsglieder (v1 ; v1' bzw. v2 ; v2') ein ganzzahliges Vielfaches der Periodendauer des Taktsignals des Digitalfilters ist, dessen Frequenz gleich der vierfachen Farbhilfsträgerfrequenz ist, gekennzeichnet durch folgende Merkmale :

die zweite Teilschaltung (t2) enthält ferner eine signalflußmäßige zweite Reihenschaltung aus einer dritten und aus einer vierten Teilschaltung (t3, t4), die jeweils aus einem dritten bzw. vierten Verzögerungsglied (v3 ; v3', bzw. v4, v4') und aus einem ersten bzw. zweiten Subtrahierer (s1, s2) bestehen, deren Minuend-Eingang das jeweils unverzögerte Signal und deren Subtrahend-Eingang das jeweils verzögerte Signal der dritten bzw. vierten Teilschaltung (t3, t4) zugeführt ist,

der das Ausgangssignal des Digitalfilters Liefernde Summierer (s3) ist ein dritter Subtrahierer, dessen Subtrahend-Eingang am Ausgang des Multiplizierers (m) und dessen Minuend-Eingang am Ausgang des zweiten Verzögerungsglieds (v2 ; v2') liegt, und

die Verzögerungszeit des ersten bis vierten Verzögerungsglieds (v1 ; v1' bis v4 ; v4') ist gleich der einfachen Periodendauer des Taktsignals des Digitalfilters.

2. Integrierte Schaltung nach Anspruch 1, gekennzeichnet durch folgende Merkmale :

der ersten Teilschaltung (t1) ist signalflußmäßig eine fünfte Teilschaltung (t5) aus einem fünften Verzögerungsglies (v5) und einem zweiten Addierer (a2) für das Eingangs- und das Ausgangssignal des fünften Verzögerungsglieds (v5) vorgeschaltet, und

die Verzögerungszeit des ersten bis vierten Verzögerungsglieds (v1' bis v4') ist gleich der doppelten und die Verzögerungszeit des fünften Verzögerungsglieds (v5) gleich der einfachen Periodendauer des Taktsignals des Digitalfilters (Fig. 3).

3. Integrierte Schaltung nach Anspruch 1 oder 2, dadurch gekennzeichnet, daß zwischen dem Ausgang des Multiplizierers (m) und dem Subtrahend-Eingang des dritten Subtrahierers (s3) eine weitere Teilschaltung (t6) mit nichtlinearer Amplitudencharakteristik, insbesondere eine solche mit Unterdrückung kleiner Signale, angeordnet ist.

4. Integrierte Schaltung nach einem der Ansprüche 1 bis 3 für Digitalsignale im natürlichen Binärcode, dadurch gekennzeichnet, daß die Zahlenwerte des Peaking-Faktors (k) Zweierpotenzen sind.

5. Integrierte Schaltung nach Anspruch 4, gekennzeichnet durch folgende Merkmale :

dem Multiplizierer (m) ist eine erste positive Zweierpotenz (k⁺) zugeführt,

der eine Eingang eines Zusatzmultiplizierers (mz) liegt am Ausgang des zweiten Subtrahierers (s2), und seinem anderen Eingang ist eine zweite Zweierpotenz (k⁻) oder die Zahl null zugeführt, und

der jeweilige Ausgang von Multiplizierer (m) und Zusatzmultiplizierer (mz) ist mit jeweils einem Eingang eines dritten Addierers (a3) verbunden, dessen Ausgang am Eingang des dritten Subtrahierers (s3) bzw. der weiteren Teilschaltung (t6) liegt (Fig. 4).

## Claims

1. Integrated circuit of a digital filter used in the digital luminance channel of a color-television receiver to give image enhancement (« peaking ») and containing a first cascade of subnetworks the first of which (t1) consists of a first delay element (v1, v1') and a first adder (a1) for the input and output signals of the first delay element, and the second of which (t2) consists of a second delay element (v2, v2'), a multiplier (m) one input signal of which is a factor determining the measure of the image enhancement (= peaking factor k), and a summer which delivers the output signal of the digital filter and whose first and second inputs are connected to the output of the second delay element (v2, v2') and to the output of the multiplier (m), respectively, the delay provided by each of the delay elements being equal to an integral multiple of the period of the clock signal of the digital filter, whose frequency is equal to four times the chrominance-subcarrier frequency, characterized by the following features :

The second subnetwork (t2) further includes a second cascade formed by a third subnetwork (t3) and a fourth subnetwork (t4), the third subnetwork (t3) consisting of a third delay element (v3, v3') and a first subtracter (s1), and the fourth subnetwork (t4) consisting of a fourth delay element (v4, v4') and a second subtracter (s2), the minuend inputs of said subtracters being fed with the undelayed signals of the third subnetwork (t3) and the fourth subnetwork (t4), respectively, and the subtrahend inputs of said subtracters being fed with the delayed signals of the third subnetwork (t3) and the fourth subnetwork (t4), respectively ;

the summer is a third subtracter (s3) having its subtrahend input and its minuend input connected to the output of the multiplier (m) and to the output of the second delay element (v2, v2'), respectively, and

the delay provided by each of the first to fourth delay elements (v1... v4) is equal to one period of the clock signal of the digital filter.

2. A modification of the integrated circuit claimed in claim 1, characterized by the following features :

The first subnetwork (t1) is preceded by a fifth subnetwork (t5) consisting of a fifth delay element (v5) and a second adder (a2) for the input and output signals of the fifth delay element (v5), and the delay provided by each of the first to fourth delay elements (v1'... v4') is equal to twice the period of the clock signal of the digital filter, and the delay provided by the fifth delay element (v5) is equal to one period of the clock signal of the digital filter.

3. An integrated circuit as claimed in claim 1 or 2, characterized in that an additional subnetwork (t6) with a nonlinear amplitude characteristic, particularly a characteristic suitable for suppressing small signals, is located between the output of the multiplier (m) and the subtrahend input of the third subtracter (s3).

4. An integrated circuit as claimed in any one of claims 1 to 3 for digital signals in the pure binary code, characterized in that the numerical values of the peaking factor (k) are powers of two.

5. An integrated circuit as claimed in claim 4, characterized by the following features :

the multiplier (m) is fed with a first positive power of two (k⁺) ;

one input of an additional multiplier (mz) is connected to the output of the second subtracter (s2), and the other input is fed with a second power of 2 (k⁻) or with the number zero, and

the outputs of the multiplier (m) and the additional multiplier (mz) are each connected to one of the inputs of a third adder (a3) having its output coupled to the input of the third subtracter (s3) or the additional subnetwork (t6).

**Revendications**

1. Circuit intégré de filtre numérique utilisé dans le canal de luminance numérique de récepteurs de télévision couleurs pour renforcer les contours de l'image (« peaking ») et comprenant une première chaine de circuits élémentaires, dont le premier (t1) consiste en un premier élément à retard (v1 ; v1') et un premier additionneur (a1) pour les signaux d'entrée et de sortie du premier élément à retard (v1 ; v1') et dont le second (t2) consiste en un deuxième élément à retard (v2 ; v2'), un multiplicateur (m) dont un premier signal d'entrée est un facteur déterminant le taux de renforcement de l'image (facteur de « peaking » k) et un sommateur (s3) qui fournit le signal de sortie du filtre numérique et dont les première et deuxième entrées sont respectivement connectées à la sortie du deuxième élément à retard (v2 ; v2') et à la sortie du multiplicateur (m), le retard fourni par les éléments à retard (v1 ; v1' et v2 ; v2') étant égal à un multiple entier de la période des signaux d'horloge du filtre numérique, dont la fréquence est égale à quatre fois la fréquence de la sous-porteuse de chrominance, caractérisé en ce que :

le deuxième circuit élémentaire (t2) comprend de plus une deuxième chaine formée par un troisième circuit élémentaire (t3) et un quatrième circuit élémentaire (t4), ceux-ci consistant respectivement en un troisième et un quatrième élément à retard (v3 ; v3' et v4 ; v4') et un premier et un deuxième soustracteur (s1 et s2), dont les entrées de terme principal et les entrées de terme à soustraire reçoivent respectivement chacune le signal non retardé et le signal retardé par le troisième et le quatrième circuit élémentaire (t3, t4) ;

le sommateur fournissant le signal de sortie du filtre numérique (s3) est un troisième soustracteur dont l'entrée de terme à soustraire est connectée à la sortie du multiplicateur (m) et l'entrée de terme principal est connectée à la sortie du deuxième élément à retard (v2, v2'), et

le retard fourni par chacun des premier à quatrième éléments à retard (v1 ; v1' à v4 ; v4') est égal à une période des signaux d'horloge du filtre numérique.

2. Circuit intégré selon la revendication 1, caractérisé en ce que :

le premier circuit élémentaire (t1) est précédé par un cinquième circuit élémentaire (t5) consistant en un cinquième élément à retard (v5) et un deuxième additionneur (a2) pour les signaux d'entrée et de sortie du cinquième élément à retard (v5), et

le retard fourni par chacun des premier à quatrième éléments à retard (v1' à v4') est égal à deux fois la période du signal d'horloge du filtre numérique, tandis que le retard fourni par le cinquième élément à retard (v5) est égal à une période du signal d'horloge du filtre numérique (fig. 3).

3. Circuit intégré selon la revendication 1 ou 2, caractérisé en ce qu'un circuit élémentaire additionnel (t6) ayant une caractéristique d'amplitude non linéaire, en particulier une caractéristique convenant à la suppression de signaux faibles, est situé entre la sortie du multiplicateur (m) et l'entrée de terme à soustraire du troisième soustracteur (s3).

4. Circuit intégré selon l'une quelconque des revendications 1 à 3, pour des signaux numériques en code binaire naturel, caractérisé en ce que les valeurs numériques du facteur d'accentuation (k) sont des puissances de deux.

5. Circuit intégré selon la revendication 4, caractérisé en ce que :

une première puissance de deux positive (k) est fournie au multiplicateur (m),

une entrée d'un multiplicateur additionnel (mz) est connectée à la sortie du deuxième soustracteur (s2), tandis que son autre entrée reçoit une deuxième puissance de deux (f) ou le nombre zéro, et

les sorties du multiplicateur (m) et du multiplicateur additionnel (mz) sont chacune connectées à une des entrées d'un troisième additionneur (a3) dont la sortie est couplée à l'entrée du troisième soustracteur (s3) ou du circuit élémentaire additionnel (t6) (fig. 4).

FIG.1

FIG.2

FIG.3

FIG.4

FIG. 5

FIG. 6